# EUROPÄISCHE PATENTSCHRIFT

(11) **EP 0 427 172 B1**
(45) Veröffentlichungstag und Bekanntmachung des Hinweises auf die Patenterteilung: **22.01.1997**
(21) Anmeldenummer: 90121130.0
(22) Anmeldetag: 05.11.1990
(51) Int. Cl.: G06F 15/02

(54) **Kleinrechner mit steckbarer Speichereinheit zur Datensicherung**
Microcomputer with plug-in memory unit for data protection
Micro-ordinateur avec unité de mémoire enfichable pour protection des données

(30) Priorität: 10.11.1989 DE 3937541
(43) Veröffentlichungstag der Anmeldung: 15.05.1991
(73) Patentinhaber: TANDBERG DATA A/S, 0808 Oslo 8 (NO)
(72) Erfinder: Guttorm, Rudi, N-1472 Fjellhamar (NO)
(74) Vertreter: Goddar, Heinz J., Dr.

(56) Entgegenhaltungen:
- WO-A-88/06793
- US-A- 4 769 764
- US-A- 4 858 162

## Beschreibung

Die Erfindung bezieht sich auf einen Kleinrechner, insbesondere einen tragbaren Personalcomputer gemäß dem Oberbegriff des Hauptanspruches.

Die fortschreitende Technik ermöglicht es, immer höhere Rechenleistung bei Personalcomputern zu erzielen, die gleichzeitig auch noch immer kompakter aufgebaut sind. Das gilt für das gesamte Produktspektrum dieser Kleinrechner, d. h. für die sogenannten "Desk-Top"-Rechner des oberen Leistungsbereiches, aber insbesondere auch für die tragbaren sogenannten "Lap-Top"-Rechner des unteren Leistungsbereiches. Gerade bei diesen ist der technische Fortschritt auch wegen der spezifischen Randbedingungen besonders augenfällig. Neben dem Preis/Leistungsverhältnis spielen gerade bei den Rechnern dieses unteren Leistungsbereiches das Volumen und das Gewicht eine entscheidende Rolle. Nicht zuletzt ist auch ihr Energieverbrauch im Betriebszustand sehr wesentlich, da diese Rechner nach ihrem Anwendungszweck möglichst unabhängig vom Netz einsetzbar sein sollen.

Es ist bereits gelungen, sogar Festplattenspeicher im Hinblick auf diese Anforderungen soweit zu optimieren, daß auch dieser Speichertyp bei diesen Rechnern verwendbar ist. Die in "Lap-Top"-Rechnern heute eingesetzten Floppydisk- oder Festplattenspeicher sind Speicher, deren Abmessungen dem sogenannten Formfaktor von 3 1/2" entspricht. Dies ist ein Industriestandard, der als Einbaumaß eine Höhe H von 41,3 mm, eine Weite W von 101,6 mm und eine Länge L von 146,1 mm festlegt (im Zollsystem entspricht dem: H x W x L = 1 3/8" x 4" x 5 3/4"). Bei "Lap-Top"-Rechnern werden allerdings Speicher des 3 1/2"-Formfaktors mit reduzierter Bauhöhe von 25,4 mm (1" entsprechend) eingesetzt.

Bei Personalcomputern dieses Leistungsbereiches muß der Sicherung des Datenbestandes eine immer größere Aufmerksamkeit geschenkt werden, d. h. auch die Kapazität des Datensicherungsspeichers ("backup store") muß entsprechend mitwachsen. Die heute vielfach für die Datensicherung bei Kleinrechnern verwendeten Floppydiskspeicher werden selbst bei einer zu erwartenden Kapazität von etwa 20 Mb diesen Aufgaben nicht mehr gewachsen sein.

Es stellt sich daher das Problem, für leistungsfähige Personalcomputer entsprechende Möglichkeiten bereitzustellen, auch die verarbeiteten Daten zu sichern. Dem integrierten Einbau dafür nutzbarer, weiterer Speicherkapazität in den Rechnermodul selbst stehen insbesondere auch bei den genannten Rechnern des unteren Leistungsbereiches die oben erwähnten kritischen Randbedingungen, wie Volumen, Gewicht und unter Umständen auch Energieverbrauch entgegen.

Man könnte sich aber vorstellen, stationäre Einrichtungen ("docking stations") vorzusehen, an die man auch tragbare Kleinrechner zum Übertragen von Daten anschließen kann, um Druckvorgänge auszuführen, die im Kleinrechner gespeicherten Daten in anderer Weise weiterzuverarbeiten oder auch nur diese Daten zu sichern. Für die Datensicherung erscheint aber dieser Lösungsansatz nicht voll befriedigend. Aus Gründen eines hohen Bedienungskomforts und eines weiten Anwendungsbereiches sollte im laufenden Betrieb ein Abspeichern von Daten zum Zwecke der Datensicherung an sich beliebig möglich sein und nicht von der momentanen Verfügbarkeit einer stationär angeordneten zentralen Einrichtung abhängen.

Der vorliegenden Erfindung liegt daher die Aufgabe zugrunde, für einen Kleinrechner der eingangs genannten Art, Möglichkeiten der Datensicherung zu schaffen, die an die Leistungsfähigkeit auch zukünftiger Kleinrechner angepaßt sind, d. h. selbst wiederum in bezug auf z. B. Volumen, Gewicht, Speicherkapazität in einem angemessenen Rahmen liegen.

Bei einem Kleinrechner, insbesondere tragbaren Personalcomputer der eingangs genannten Art wird diese Aufgabe erfindungsgemäß durch die im Kennzeichen des Hauptanspruches beschriebenen Merkmale gelöst.

Diese Lösung geht zunächst davon aus, daß ein stetiger Fortschritt auf dem Gebiet der Kassettenbandgeräte für die Datenspeicherung gezeigt hat, daß in diesem Speichertyp durchaus noch Möglichkeiten liegen, ihn selbst bei fortschreitender Kapapazitätserhöhung weiter zu miniaturisieren. Weiterhin sind die sogenannten "Streaming-Mode"-Bandgeräte soweit ausgereift, daß heute damit vernünftige Datenübertragungsraten erzielbar sind, die gerade bei der Datensicherung eine wesentliche Rolle spielen, da in diesem Betriebsfall relativ große Datenmengen zwischen dem Kleinrechner und dem Datensicherungsspeicher übertragen werden müssen. Andererseits lassen sich "Streaming-Mode"-Bandgeräte relativ einfach aufbauen, da diese Geräte nicht im Start/Stop-Betrieb arbeiten sondern im laufenden Betrieb kontinuierlich einen "Datenstrom" aufzeichnen. Sie sind daher auch im Preis/Leistungsverhältnis günstig.

Die erfindungsgemäße Lösung steht im Gegensatz zu an sich denkbaren Lösungen, bei denen ein eigener Datensicherungsspeicher in Form eines getrennt vom Rechner aufgestellten und mit diesem über Kabel verbundenen, eigenständigen Gerätes verwendet wird. Solche Lösungen werden an sich bei Personalcomputern des oberen Leistungsbereiches bereits heute eingesetzt. Sie erweisen sich aber nicht als unbedingt zweckmäßig, da sie im Falle eines "Desk-Top"-Rechners zusätzliche Stellfläche benötigen und für "Lap-Top"-Rechner insbesondere auch wegen der Kabelverbindungen, abgesehen von dem Gewicht und der Größe heute handelsüblicher separater Datensicherungsspeicher noch unhandlicher sind.

Zwar erscheint es auch denkbar, in Zukunft miniaturisierte Datensicherungsspeicher unmittelbar in einen Einbauplatz des Kleinrechners einzubauen, d. h. in das Rechnergehäuse zu integrieren. Dem steht aber entgegen, daß dieser Einbauplatz dann für zusätzliche Floppydisk- bzw. Festplattenspeicher nicht zur Verfügung stünde. Die erfindungsgemäße Lösung bietet daher alle Vorteile an hoher Flexibilität. Z. B. kann der Kleinrechner mit bzw. ohne eingeschobenen Datensicherungsspeicher betrieben werden. Das Bandgerät als Datensicherungsspeicher ist bequem und einfach mit dem Kleinrechner koppelbar bzw. davon abziehbar und stellt durch die Möglichkeit des Auswechselns der Magnetbandkassette eine an sich unbegrenzte Speicherkapazität zur Verfügung. Die notwendigen Verbindungswege führen über kurze Signal- bzw. Versorgungsleitungen aufgrund der Verwendung einer Mehrfachsteckverbindung. Derartige Steckverbindungen sind heute soweit ausgereift, daß sie ausreichende Schirmungsmöglichkeiten und damit eine hohe Störsicherheit bieten. Sie können auch robust genug ausgestaltet werden, so daß sie einer Vielzahl von Steckvorgängen mechanisch und elektrisch gewachsen sind.

Weitere Vorteile der erfindungsgemäßen Lösung ergeben sich aus der nachfolgenden Beschreibung von Ausführungsbeispielen.

Derartige Ausführungsbeispiele werden im folgenden anhand der Zeichnung näher erläutert. Dabei zeigt:
Figur 1 eine dreidimensionale Darstellung eines "Lap-Top"-Rechners mit einem in einer seiner Seitenflächen angeordneten Einschubplatz für einen als "Streaming-Mode"-Bandgerät ausgebildeten Datensicherungsspeicher,
Figur 2 eine weitere Ausführungsform, bei der ein "Streaming-Mode"-Bandgerät als Datensicherungsspeicher in einen Einschubkanal eingeschoben ist, der schräg in die rückwärte Deckfläche eines "Lap-Top"-Rechners eingelassen ist,
Figur 3 eine weitere Ausführungsform, bei der in der rückwärtigen Deckfläche eines "Lap-Top"-Rechners eine ausschwenkbare Tür vorgesehen ist, die auf ihrer Innenseite den rechnerseitigen Teil eines Mehrfachsteckverbinders trägt und auf die im ausgeschwenkten Zustand der Tür ein "Streaming-Mode"-Bandgerät in einer zur Deckfläche des "Lap-Top"-Rechners parallelen Richtung aufsteckbar ist,
Figur 4 eine weitere Ausführungsform, bei der ein "Streaming-Mode"-Bandgerät als Datensicherungsspeicher bei einem "Desk-Top"-Rechner eingesetzt und hier an einer Seitenwand des Rechnergehäuses angeordnet ist und
Figur 5 und Figur 6 je eine Ausführungsform für einen Mehrfachsteckverbinder zwischen Bandgerät und Kleinrechner.

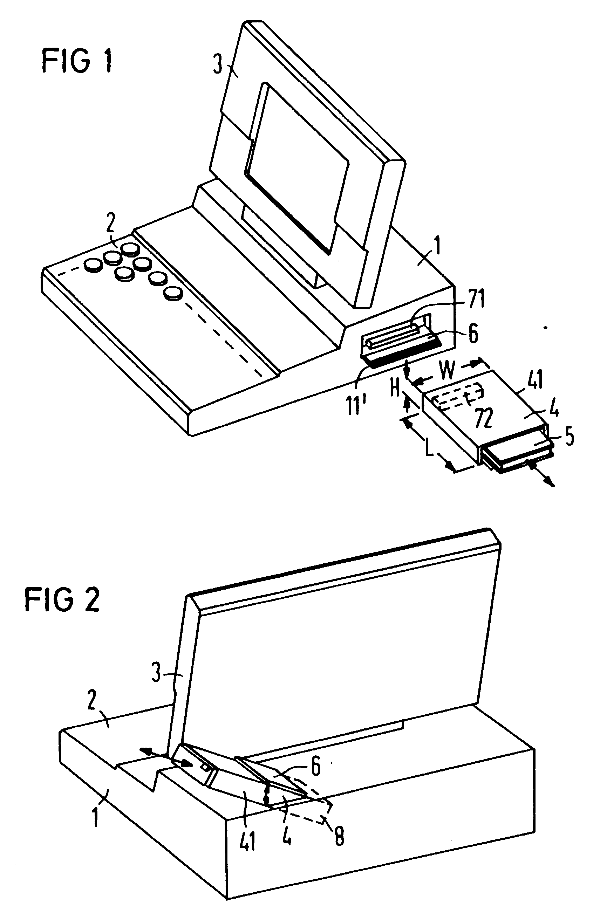

In einer dreidimensionalen Darstellung ist in Figur 1 schematisch ein "Lap-Top"-Rechner dargestellt, dessen Rechnermodul in einem Rechnergehäuse 1 untergebracht ist. Die Frontfläche des Rechnergehäuses trägt eine schematisch angedeutete Eingabetastatur 2. Aufgeklappt dargestellt und damit in Betriebslage gezeigt, ist ein Anzeigefeld 3 zu erkennen. Insoweit entspricht der Kleinrechner völlig handelsüblichen Geräten, so daß sich hier sowohl eine nähere Darstellung in der Zeichnung als auch eine detaillierte Erläuterung erübrigt.

Dieser Kleinrechner soll in Verbindung mit einem Datensicherungsspeicher betrieben werden. Im vorliegenden Fall ist dieser Datensicherungsspeicher als "Streaming-Mode"-Bandgerät 4 ausgebildet, das in der Explosionsdarstellung von Figur 1 neben dem Rechnergehäuse 1 schematisch gezeigt ist. Dieses Bandgerät 4 weist einen flachen, rechteckförmigen Rahmen auf, dessen Abmessungen vorzugsweise dem als Industriestandard festgelegten 3 1/2"-Formfaktor entsprechen. Nach diesem Formfaktor sind Einbauplätze in Kleinrechner und andere elektronische Geräte mit einer Höhe H von 41,3 mm, einer Weite W von 101,6 mm und einer Länge L von 146,1 mm definiert. Diese Abmessungen sind an sich aus dem Zollsystem abgeleitet, so daß H x W x L = 1 3/8" x 4" x 5 3/4" entspricht. Allerdings wird bei im übrigen unveränderten Abmessungen für einen Einbauplatz nach dem 3 1/2"-Formfaktor eine reduzierte Bauhöhe H angestrebt, die lediglich nur noch 25,4 mm (1" entsprechend) betragen soll.

Der Bandgeräterahmen 41 besitzt einen in Richtung seiner Längsachse verlaufenden Einschubkanal für eine Datenkassette 5, die in Figur 1 nur teilweise in das Bandgerät 4 eingeschoben dargestellt ist. Durch Pfeile ist angedeutet, daß diese Datenkassette 5 auswechselbar ist.

Ein Merkmal der hier dargestellten Lösung besteht darin, daß das Bandgerät 4 über eine Mehrfachsteckverbindung mit dem Kleinrechner verbindbar sein soll. Das Rechnergehäuse 1 besitzt zu diesem Zweck einen verhältnismäßig flachen Einbauplatz in einer seiner Seitenwände. Dieser Einbauplatz ist durch eine aus der Seitenwand des Rechnergehäuses 1 herausschwenkbare Tür 6 abgeschlossen. Im ausgeschwenkten Zustand - wie in Figur 1 dargestellt - liegt der rechnerseitige Teil 71 der Mehrfachsteckverbindung frei. An der Rückseite des Bandgerätes 4 ist - wie schematisch wiedergegeben - der bandgeräteseitige Teil 72 dieser Mehrfachsteckverbindung angeordnet. An sich ist es in das Belieben des Fachmanns gestellt, wo der Steckerteil bzw. die Steckfassung dieser Mehrfachsteckverbindung angeordnet werden soll und wie diese Teile im einzelnen mit herkömmlichen Mitteln ausgestaltet sind. Es dürfte aber zweckmäßig sein, die Steckfassung im Bandgerät 4 vorzusehen, da der Steckerteil mechanisch meist empfindlicher ist und in diesem Fall, rechnerseitig angeordnet, bei einem abgezogenen Bandgerät durch die Tür 6 abgedeckt ist.

Die Mehrfachsteckverbindung dient dem Zweck, auf eine einfache und sichere Weise das Bandgerät 4 in das Rechnergehäuse 1 einschieben zu können und dabei kurze und geschirmte Leitungswege zu erzielen, ohne daß unhandliche Kabel notwendig sind. Die Mehrfachsteckverbindung kann außerdem so ausgelegt sein, daß sie neben den Verbindungen für Datensignal- und Steuerleitungen auch Verbindungen für Versorgungsleitungen umfaßt, so daß das Bandgerät bei einer entsprechenden Auslegung mit einem optimierten niedrigen Energieverbrauch unmittelbar aus der Stromversorgung für den Kleinrechner zu betreiben ist.

Figur 2 zeigt nun eine weitere Ausführungsform für einen "Lap-Top"-Rechner. Hier ist allerdings der Einbauplatz für den Datensicherungsspeicher in der rückwärtigen Deckfläche des Rechnergehäuses 1 vorgesehen. Auch dieser Einbauplatz ist durch eine aus dieser Fläche herausschwenkbare Tür 6 im nicht bestückten Zustand abgedeckt. Hier allerdings ist der Einschubkanal schräg gegen die Deckfläche gerichtet. Man gewinnt so trotz eines relativ geringen Platzbedarfes in bezug auf die Bauhöhe des Rechnergehäuses 1 einen relativ tiefen Einschubkanal für das Bandgerät 4 und kann zugleich die Tür 6 als zusätzliche Führungsfläche benutzen. Im übrigen ist auch hier die beschriebene Steckverbindungstechnik verwendet, die hier im einzelnen jedoch aus Gründen der übersichtlichen Darstellung nicht dargestellt ist.

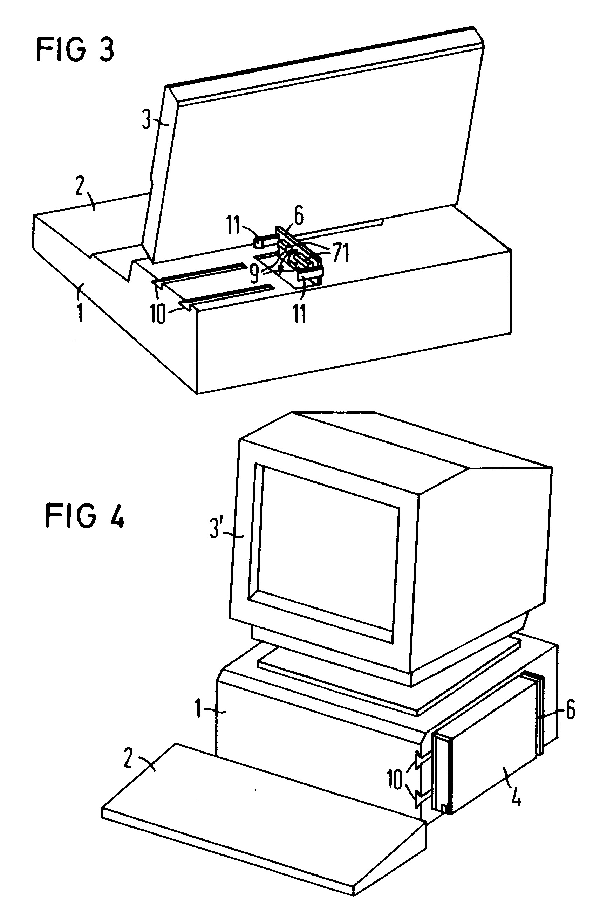

Figur 3 zeigt eine weitere Ausführungsform. Auch hier ist der Einschubplatz für den Datensicherungsspeicher an der rückwärtigen Deckfläche des Rechnergehäuses 1 vorgesehen. Das Bandgerät 4 selbst ist aus Gründen der Übersichtlichkeit nicht dargestellt, dagegen ist ausgeschwenkt die an der rückwärtigen Deckfläche des Rechnergehäuses 1 angelenkte Tür 6 gezeigt. Als Besonderheit dieser Ausführungsform ist der rechnerseitige Teil 71 der Mehrfachsteckverbindung an der Innenseite der schwenkbaren Tür festgelegt. Flexleitungen 9 sind als Verbindungsleitungen zwischen diesem rechnerseitigen Teil 71 der Mehrfachsteckverbindung und den im Rechnergehäuse 1 angeordneten elektronischen Modulen vorgesehen.

In die Deckfläche des Rechnergehäuses sind zwei schwalbenschwanzförmig ausgebildet Führungsnuten 10 eingelassen, die senkrecht zur Innenfläche der ausgeschwenkten Tür 6 ausgerichtet sind. Für den Fachmann ist ohne weiteres vorstellbar, daß die Bodenfläche des Bandgeräterahmens 41 entsprechend geformte erhabene Rippen aufweist, deren Querschnitt dem Querschnitt dieser Führungsnuten 10 entspricht. Damit ist eine parallel Führung ausgebildet, über die das Bandgerät 4 parallel zur Deckfläche des Rechnergehäuses 1 aufschiebbar ist.

In der gesteckten Lage wird das Bandgerät 4 durch Rastklinken gehalten, die einander gegenüberstehend von den beiden Seitenflächen der Tür 6 nach innen gerichtet abstehen. Für den Fachmann ist es ohne weiteres vorstellbar, daß die Seitenflächen des Bandgeräterahmens 41 entsprechende Ausnehmungen aufweisen, in die diese Rastklinken 11 im gesteckten Zustand des Bandgerätes 4 eingreifen. Allerdings könnte man den gesteckten Zustand des Bandgerätes 4 auch durch andere Maßnahmen sichern. In dem in Figur 1 dargestellten Ausführungsbeispiel z. B. weist dazu die Tür 6 - wie schematisch dargestellt - eine aus der Innenfläche der Tür hervorstehende und parallel zu ihrer Längskante verlaufende Rastnase 11′ auf, der dann eine parallel zur rückseitigen Fläche des Bandgerätes 4 verlaufende Rille in der Bodenfläche dieses Bandgerätes entspricht.

In Figur 4 schließlich ist eine weitere Ausführungsform dargestellt, die illustrieren soll, daß ein solches "Streaming-Mode"-Bandgerät 4 nicht nur bei "Lap-Top"-Rechnern sondern auch bei "Desk-Top"-Rechnern als Datensicherungsspeicher ohne weiteres verwendbar ist. Figur 4 zeigt schematisch einen solchen Personalcomputer mit einem entsprechenden Rechnergehäuse 1, einer davon abgesetzten Eingabetastatur 2 sowie einer als Datensichtstation 3′ ausgebildeten Anzeigeeinheit.

In Figur 4 ist das Bandgerät 4 im gesteckten Zustand dargestellt. Es ist ähnlich wie bei der vorstehend anhand von Figur 3 beschriebenen Ausführungsform auf eine der Seitenwände des Rechnergehäuses 1 aufgeschoben. Schematisch ist die aus dieser Seitenwand herausschwenkbare Tür 6 dargestellt, die auch in diesem Fall, allerdings hier nicht gezeigt, den rechnerseitigen Teil der Mehrfachsteckverbindung trägt.

Ersichtlich ist dennoch, daß diese über die Führungsnuten 10 gesicherte gesteckte Lage des Bandgerätes 4 diejenige Ausführungsform ist, die von dem innerhalb des Rechnergehäuses 1 verfügbaren Volumen den geringsten Anteil erfordert. Sie ist deswegen auch zweckmäßig, da sie ein sicheres Ankoppeln des Datensicherungsspeichers an den Rechner bietet. In einem speziellen Anwendungsfall könnte sie aber gegebenenfalls gewisse Einschränkungen bedeuten, da bei den Ausführungsformen nach Figur 3 bzw. Figur 4 die gesamte Bodenfläche des Bandgeräterahmens 41 unmittelbar an einer Fläche des Rechnergehäuses 1 anliegt. Dies gilt nämlich dann, wenn man aus Gründen des einfachen konstruktiven Aufbaus des Bandgerätes 4 in diesem auf eine eigene Kühlung verzichtet und es sich dann als sinnvoll erweisen kann, einen möglichst großen Teil der gesamten Oberfläche des Bandgeräterahmens 41 unmittelbar der Umgebungsluft auszusetzen. In diesem Fall könnte es zweckmäßiger sein, eine der anhand der Figuren 1 bzw. 2 beschriebenen Ausführungsformen für die Verbindung zwischen dem Rechner und dem Bandgerät 4 vorzusehen.

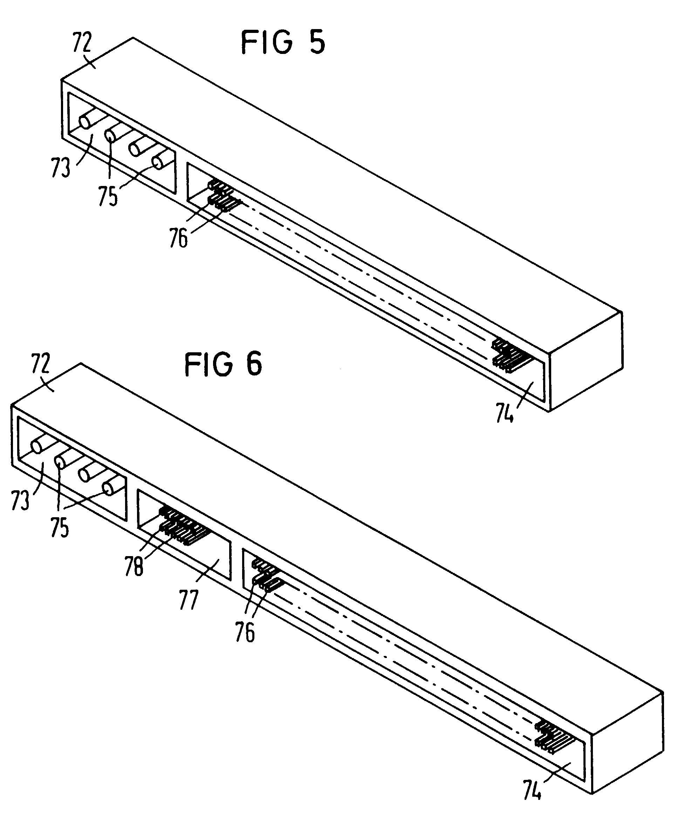

In Figur 5 bzw. 6 sind schließlich je ein Beispiel für mögliche Ausgestaltungen des Mehrfachsteckverbinders gezeigt, wobei aus Gründen der Vereinfachung lediglich das Steckerteil dargestellt ist, das beispielsweise der geräteseitige Teil 72 der Steckverbindung, wie in Figur 1 schematisch angedeutet, sein kann. In diesem Fall wäre das Steckerteil an einer Seitenkante einer Leiterplatte des Bandgerätes 4 angeordnet. Bei herkömmlichen, über Leitungskabel an einem Rechner, wie einem Personalcomputer u. ä., angeschlossenen peripheren Geräten sind die verschiedenen Arten von Verbindungsleitungen häufig über individuelle Steckverbindungen geführt. Das heißt, es sind getrennte Mehrfachstecker für Steuerleitungen für z. B. ESDI (Enhanced Small Device Interface)-, SCSI (Small Computer Systems Interface)- oder QUIC-Interfaces einerseits und die Stromversorgung andererseits vorgesehen.

Im vorliegenden Fall könnte die Toleranzgenauigkeit einzelner Steckverbinder zueinander nicht ausreichen, um ein bequemes und immer betriebssicheres Stecken des Bandgerätes 4 sicherzustellen. Es ist deshalb vorteilhaft, eine integrierte Steckverbindung vorzusehen, die alle Leitungsverbindungen zwischen der steckbaren Einheit, dem Bandgerät 4 und dem Rechnergehäuse 1 umfaßt.

Figur 6 zeigt dazu ein Beispiel für ein Steckerteil 72, das in zwei Kammern 73 bzw. 74 unterteilt ist. In der einen Kammer 73 sind Steckerstifte 75 für die Stromversorgungsleitungen zum Bandgerät 4, in der anderen Kammer Steckerstifte 76 für die Interfaceleitungen angeordnet. Figur 6 zeigt ein weiteres Beispiel für ein Steckerteil 72, das aus drei Kammern 73, 74 und 77 aufgebaut ist. Wieder enthalten die Kammern 73 und 74 die Stekkerstifte 75 bzw. 76 für Stromversorgung bzw. Interfaceleitungen. Zusätzlich ist eine dritte Kammer 77 vorgesehen, in der Steckerstifte 78 für Testleitungsverbindungen angeordnet sind.

Aus der Darstellung der Steckerteile 72 in Figur 5 bzw. Figur 6 ist ohne weiteres ableitbar, wie das zugehörige Gegenstück, die Steckfassung 71 auszubilden ist, die im angenommenen Beispiel dann auf einer Leiterplatte im Rechnergehäuse 1 angeordnet ist. Eine Detailbeschreibung der entsprechenden Steckfassungen erscheint daher unnötig. Ebensowenig ist es erforderlich, die Anordnung der Teile 71 bzw. 72 der integrierten Mehrfachsteckverbindung auf einer Leiterplatte zu zeigen und zu beschreiben, da solche Anordnungen dem Fachmann allgemein bekannt sind und ihm für die detaillierte Ausgestaltung und Anordnung der Mehrfachsteckverbindung eine Vielzahl von Einzellösungen zur Verfügung stehen.

## Patentansprüche

1. Kleinrechner, insbesondere tragbarer Personalcomputer mit einem in einem Gehäuse (1) angeordneten Rechnermodul, an den ein Datenanzeigefeld (3 bzw. 3′) und eine Eingabetastatur (2) sowie eine Speichereinheit (4) zur Datensicherung angeschlossen sind, **dadurch gekennzeichnet,** daß die Speichereinheit (4) zur Datensicherung als "Streaming-Mode"-Bandgerät ausgebildet ist und zum Anschluß an den Kleinrechner einen der beiden Teile einer standardisierten Mehrfachsteckverbindung (71, 72) aufweist und daß in dem Rechnergehäuse (1) der andere Teil der Mehrfachsteckverbindung zum unmittelbaren Aufnehmen des "Streaming-Mode"-Bandgerätes vorgesehen ist.

2. Kleinrechner nach Anspruch 1, **dadurch gekennzeichnet,** daß die Mehrfachsteckverbindung (71, 72) neben Datensignal- und Steuersignalleitungsverbindungen auch Leitungsverbindungen für Versorgungsleitungen umfaßt, so daß die Speichereinheit zur Datensicherung (4) an eine Stromversorgungseinheit des Kleinrechners anschließbar ist.

3. Kleinrechner nach Anspruch 1 oder 2, **dadurch gekennzeichnet,** daß die Speichereinheit zur Datensicherung (4) als Datenkassettenbandgerät mit einem auswechselbaren Datenträger (5) ausgebildet ist.

4. Kleinrechner nach einem der Ansprüche 1 bis 3, **dadurch gekennzeichnet,** daß die äußeren Abmessungen der Speichereinheit zur Datensicherung (4) dem standardisierten 3 1/2"-Formfaktor entsprechen, wobei seine Bauhöhe H vorzugsweise einen Bereich von 25 mm nicht überschreitet.

5. Kleinrechner nach einem der Ansprüche 1 bis 4, **dadurch gekennzeichnet,** daß das Bandgerät (4) einen Bandgeräterahmen (41) aufweist, in dem senkrecht zu einer seiner Frontseiten ein Einschubkanal zum Einsetzen einer Datenkassette (5) als Datenträger und an der Rückseite der geräteseitige Teil (72) der Mehrfachsteckverbindung (71, 72) angeordnet sind.

6. Kleinrechner nach einem der Ansprüche 1 bis 5, **dadurch gekennzeichnet,** daß in einer Fläche des Rechnergehäuses (1) eine ausschwenkbare Tür (6) vorgesehen ist, die den rechnerseitigen Teil (71) der Mehrfachsteckverbindung (71, 72) abdeckt bzw. im ausgeschwenkten Zustand diesen Teil der Mehrfachsteckverbindung zur Aufnahme des Bandgerätes (4) freigibt.

7. Kleinrechner nach Anspruch 6, **dadurch gekennzeichnet,** daß in dem Rechnergehäuse (1) ein flacher Einschubkanal zum Aufnehmen des Bandgerätes (4) sowie Mittel (11 bzw. 11′) zur Sicherung der gesteckten Lage des Bandgerätes (4) vorgesehen sind.

8. Kleinrechner nach Anspruch 7, **dadurch gekennzeichnet,** daß der Einschubkanal für das Bandgerät (4) senkrecht zu einer Wandfläche des Rechnergehäuses (1) angeordnet ist.

9. Kleinrechner nach Anspruch 7, **dadurch gekennzeichnet,** daß der Einschubkanal (8) für das Bandgerät (4) schräg zu einer Wandfläche des Rechnergehäuses (1) angeordnet ist und die ausschwenkbare Tür (6) gleichzeitig eine Führungsfläche für das einzusetzende Bandgerät (4) bildet.

10. Kleinrechner nach einem der Ansprüche 6 oder 7, **dadurch gekennzeichnet,** daß der rechnerseitige Teil (71) der Mehrfachsteckverbindung (71, 72) an der Innenseite der ausschwenkbaren Tür (6) angeordnet ist und Flexleitungen (9) als Verbindungsleitungen zwischen diesem Teil der Mehrfachsteckverbindung und den im Rechnergehäuse (1) angeordneten elektronischen Einheiten vorgesehen sind.

11. Kleinrechner nach Anspruch 10, **dadurch gekennzeichnet,** daß in der Wandfläche des Rechnergehäuses (1), die die ausschwenkbare Tür (6) trägt, Führungsnuten (10) mit vorzugsweise schwalbenschwanzförmigem Querschnitt vorgesehen sind, die senkrecht zur Innenseite der ausgeschwenkten Tür (6) verlaufen und daß eine Bodenfläche des Bandgeräterahmens (41) vorspringende Führungsrippen entsprechenden Querschnitts aufweist, womit sich eine Parallelführung für das Ankoppeln des Bandgerätes (4) an das Rechnergehäuse (1) ergibt.

12. Kleinrechner nach einem der Ansprüche 7 bis 11, **dadurch gekennzeichnet,** daß die Mittel zum Sichern der gesteckten Lage des Bandgerätes (4) mindestens eine Rastnase (11′) umfassen, die aus der Innenfläche der ausschwenkbaren Tür (6) herausragt und in der gesteckten Lage des Bandgerätes (4) in eine entsprechend geformte Ausnehmung im Bandgeräterahmen (41) eingreift.

13. Kleinrechner nach einem der Ansprüche 7 bis 11, **dadurch gekennzeichnet,** daß die Mittel zum Sichern der gesteckten Lage des Bandgerätes (4) einander gegenüberstehende, von den Seitenkanten der Tür (6) nach innen vorspringende Rastklinken (11) umfassen und die Seitenflächen des Bandgeräterahmens (41) entsprechend geformte Ausnehmungen aufweisen, in die die Rastklinken, den Bandgeräterahmen U-förmig umfassend, in der gesteckten Lage des Bandgerätes (4) eingreifen.

## Claims

1. A microcomputer, more particularly a portable personal computer having a computer module disposed in a housing (1), to which module a data display panel (3; 3') and an inputting keyboard (2) are connected, together with a memory unit (4) for data back-up, characterised in that the memory unit (4) for the data back-up is constructed as a streaming mode tape unit and for connection to the microcomputer has one of the two parts of a standardised multiple contact plug connection (71, 72) and in that the computer housing (1) contains the other part of the multiple contact plug connection for direct accommodation of the streaming mode tape unit.

2. A microcomputer according to claim 1, characterised in that the multiple contact plug connection (71, 72) includes line connections for supply lines in addition to data signal and control signal line connections so that the data back-up memory unit (4) is connectable to a power supply unit of the microcomputer.

3. A microcomputer according to claim 1 or 2, characterised in that the data back-up memory unit (4) is constructed as a data cassette tape unit with an interchangeable data support (5).

4. A microcomputer according to any one of claims 1 to 3, characterised in that the external dimensions of the data back-up memory unit (4) correspond to the standardised 3½" form factor, its overall height (H) preferably not exceeding a range of 25 mm.

5. A microcomputer according to any one of claims 1 to 4, characterised in that the tape unit (4) has a tape unit frame (41) in which an insertion channel for the insertion of a data cassette (5) as the data support is disposed perpendicularly to its front sides, while that part (72) of the multiple contact plug connection (71, 72) which is adjacent the tape unit is disposed at the back.

6. A microcomputer according to any one of claims 1 to 5, characterised in that a swing-out door (6) is provided in one surface of the computer housing (1) and covers that part (71) of the multiple contact plug connection (71, 72) which is adjacent the computer, while in the swung-out state it exposes this part of the multiple contact plug connection for receiving the tape unit (4).

7. A microcomputer according to claim 6, characterised in that a flat insertion channel for accommodating the tape unit (4) and means (11; 11') for securing the plugged-in position of the tape unit (4) are provided in the computer housing (1).

8. A microcomputer according to claim 7, characterised in that the insertion channel for the tape unit (4) is disposed perpendicularly to one wall surface of the computer housing (1).

9. A microcomputer according to claim 7, characterised in that the insertion channel (8) for the tape unit (4) is disposed at an angle to one wall surface of the computer housing (1) and the swing-out door (6) at the same time forms a guide surface for the tape unit (4) for insertion.

10. A microcomputer according to claim 6 or 7, characterised in that that side (71) of the multiple contact plug connection (71, 72) which is adjacent the computer is disposed on the inside of the swing-out door (6) and flexible leads (9) are provided as connecting lines between said part of the multiple contact plug connection and the electronic units disposed in the computer housing (1).

11. A microcomputer according to claim 10, characterised in that guide grooves (10) preferably of dove-tailed cross-section are provided in that wall surface of the computer housing (1) which carries the swing-out door (6), said guide grooves extending perpendicularly to the inside of the swung-out door (6) and in that a base surface of the tape unit frame (41) has projecting guide ribs of corresponding cross-section, to form a parallel guide for coupling the tape unit (4) to the computer housing (1).

12. A microcomputer according to any one of claims 7 to 11, characterised in that the means for securing the plugged-in position of the tape unit (4) comprise at least one detent lug (11') which projects from the inner surface of the swing-out door (6) and, in the plugged-in position of the tape unit (4), engages in a correspondingly shaped recess in the tape unit frame (41).

13. A microcomputer according to any one of claims 7 to 11, characterised in that the means for securing the tape unit (4) in the plugged-in position comprise detent catches (11) disposed opposite one another and projecting inwardly from the side edges of the door (6), and the side surfaces of the tape unit frame (41) have correspondingly shaped recesses in which the detent catches, engaging in the form of a U around the tape unit frame, engage when the tape unit (4) is in the plugged-in position.

## Revendications

1. Micro-ordinateur, en particulier ordinateur individuel portable, comportant un module de calcul placé dans un boîtier (1) et auquel sont reliés un écran (3 ou 3'), un clavier d'entrée (2) et une unité de mémoire (4) pour la sauvegarde des données, caractérisé par le fait que l'unité de mémoire (4) pour la sauvegarde des données est un dérouleur de bande continu et présente pour son raccordement au micro-ordinateur une des deux parties d'un connecteur multicontact normalisé (71, 72), et que l'autre partie de ce connecteur multicontact est prévue dans le boîtier (1) pour recevoir directement le dérouleur de bande continu.

2. Micro-ordinateur selon la revendication 1, caractérisé par le fait que le connecteur multicontact (71, 72) comprend, outre des connexions de lignes de signaux de données et de signaux de commande, des connexions pour des lignes d'alimentation, de sorte que l'unité de mémoire pour la sauvegarde des données (4) peut être raccordée à un bloc d'alimentation du micro-ordinateur.

3. Micro-ordinateur selon l'une des revendications 1 et 2, caractérisé par le fait que l'unité de mémoire pour la sauvegarde des données (4) est un dérouleur de bande à cassette de données ayant un support de données changeable (5).

4. Micro-ordinateur selon l'une des revendications 1 à 3, caractérisé par le fait que les dimensions extérieures de l'unité de mémoire pour la sauvegarde des données (4) correspondent au facteur de forme de 3 pouces 1/2 normalisé, sa hauteur H, de préférence, ne dépassant pas le domaine de 25 mm.

5. Micro-ordinateur selon l'une des revendications 1 à 4, caractérisé par le fait que le dérouleur de bande (4) présente un châssis (41) dans lequel est prévu perpendiculairement à une de ses faces frontales un canal pour l'introduction d'une cassette de données (5) servant de support de données et est prévue sur la face arrière la partie côté dérouleur (72) du connecteur multicontact (71, 72).

6. Micro-ordinateur selon l'une des revendications 1 à 5, caractérisé par le fait que dans une face du boîtier (1) est prévue une porte basculante (6) qui couvre la partie côté ordinateur (71) du connecteur multicontact (71, 72) et, à l'état ouvert, dégage cette partie du connecteur multicontact pour la réception du dérouleur de bande (4).

7. Micro-ordinateur selon la revendication 6, caractérisé par le fait que dans le boîtier (1) sont prévus un canal d'introduction plat destiné à recevoir le dérouleur de bande (4) et des moyens (11 ou 11') de blocage du dérouleur de bande (4) en position engagée.

8. Micro-ordinateur selon la revendication 7, caractérisé par le fait que le canal d'introduction du dérouleur de bande (4) est perpendiculaire à une face de la paroi du boîtier (1).

9. Micro-ordinateur selon la revendication 7, caractérisé par le fait que le canal (8) d'introduction du dérouleur de bande (4) est oblique par rapport à une face de la paroi du boîtier (1) et la porte basculante (6) forme en même temps une surface de guidage pour le dérouleur de bande (4) à introduire.

10. Micro-ordinateur selon l'une des revendications 6 et 7, caractérisé par le fait que la partie côté ordinateur (71) du connecteur multicontact (71, 72) est placée sur la face intérieure de la porte basculante (6), et des lignes souples (9) sont prévues comme lignes de raccordement entre cette partie du connecteur multicontact et les blocs électroniques montés dans le boîtier (1).

11. Micro-ordinateur selon la revendication 10, caractérisé par le fait que dans la face de la paroi du boîtier (1) qui porte la porte basculante (6) sont prévues des rainures de guidage (10) de préférence à section en queue d'aronde qui s'étendent perpendiculairement à la face intérieure de la porte (6) ouverte, et qu'une surface inférieure du châssis (41) du dérouleur de bande présente des nervures de guidage saillantes de section correspondante, ce qui produit un guidage parallèle pour l'accouplement du dérouleur de bande (4) au boîtier (1).

12. Micro-ordinateur selon l'une des revendications 7 à 11, caractérisé par le fait que les moyens de blocage du dérouleur de bande (4) en position engagée comprennent au moins un talon d'arrêt (11') qui fait saillie de la face intérieure de la porte basculante (6) et, lorsque le dérouleur de bande (4) est en position engagée, s'engage dans un évidement de forme correspondante fait dans le châssis (41) du dérouleur de bande.

13. Micro-ordinateur selon l'une des revendications 7 à 11, caractérisé par le fait que les moyens de blocage du dérouleur de bande (4) en position engagée comprennent des cliquets se faisant face (11) saillant des bords latéraux de la porte (6) vers l'intérieur, et les faces latérales du châssis (41) du dérouleur de bande présentent des évidements de forme correspondante dans lesquels, lorsque le dérouleur de bande (4) est en position engagée, les cliquets s'engagent en enserrant en forme de U le châssis du dérouleur de bande.
